# EUROPÄISCHE PATENTSCHRIFT

(11) **EP 0 803 831 B1**
(45) Veröffentlichungstag und Bekanntmachung des Hinweises auf die Patenterteilung: **11.06.2003**
(21) Anmeldenummer: 97101437.8
(22) Anmeldetag: 30.01.1997
(51) Int. Cl.: G06K 7/06, G06K 13/08, G06K 7/00

(54) **Kartenleser für Chipkarten**
IC-card reader
Lecteur de cartes à puce

(30) Priorität: 24.04.1996 DE 19616316
(43) Veröffentlichungstag der Anmeldung: 29.10.1997
(73) Patentinhaber: ROBERT BOSCH GMBH, 70442 Stuttgart (DE)
(72) Erfinder: Jelinek, Egbert, 31157 Sarstedt (DE)

(56) Entgegenhaltungen:
- EP-A- 0 653 719
- DE-A- 4 332 174

## Beschreibung

### Stand der Technik

Die Erfindung geht von einem Kartenleser für Chipkarten nach der Gattung des Hauptanspruchs aus.

Aus der nicht vorveröffentlichten Patentanmeldung DE-A-1950 1620 ist bereits ein Kartenleser für Chipkarten mit einem Mikrochip und dessen Kontakten auf der Oberfläche bekannt, wobei der Kartenleser einen Kartenschacht zur Aufnahme und elektromechanischen Arretierung der Chipkarte und Gegenkontakte zum mechanischen Zusammenwirken mit den Kontakten des Mikrochips und zur elektrisch leitenden Verbindung eines Rechners mit dem Mikrochip aufweist. Im Kartenleser ist eine erste Schaltanordnung vorgesehen, die auf die An- oder Abwesenheit einer Chipkarte im Kartenschacht anspricht. Weiterhin ist im Kartenschacht des Kartenlesers ein längsbeweglicher Schlitten zum Transport der Chipkarte vorgesehen, der eine quer zur Bewegungsrichtung des Schlittens verlaufende, in Anschubrichtung wirkende Rast aufweist. Die Rast wirkt mit dem Anker eines Elektromagneten zusammen. Auf den Überhub des Schlittens spricht eine zweite Schaltanordnung an.

Aus der ebenfalls nicht vorveröffentlichten Patentanmeldung DE-A-1950 1641 ist ein Kartenleser für Chipkarten mit einem Mikrochip und dessen Kontakten auf der Oberfläche der Chipkarte bekannt, bei dem ein Kartenschacht zur Aufnahme und mechanischen Arretierung einer Chipkarte und Gegenkontakte zum mechanischen Zusammenwirken mit den Kontakten des Mikrochips und zur elektrisch leitenten Verbindung eines Rechners mit dem Mikrochip vorhanden sind. Der Kartenleser weist außerdem eine erste Schaltanordnung auf, die auf die An- oder Abwesenheit einer Chipkarte im Kartenschacht anspricht. Weiterhin ist im Kartenschacht ein längsverschieblicher Schlitten zur Aufnahme der Chipkarte vorgesehen, dessen Verschiebeweg durch eine eingearbeitete Schaltkulisse mit Schaltherz begrenzt ist, die mit einem im Kartenschacht angeordneten beweglichen, zwei Schaltanordnungen betätigenden rastbaren Schalthebel zusammenwirkt.

Aus der DE 43 32 174 A1 ist ein Chipkartenleser bekannt, bei dem ein Schlitten zur Aufnahme einer Chipkarte längsverschieblich in einem Rahmen geführt ist. Nach Einschieben der Karte stößt die Karte zunächst an das hintere Ende des Schlittens, so dass anschließend Schlitten und Karte gemeinsam weitergeführt werden, bis die gewünschte Endposition erreicht ist. Die Kontaktierung zwischen den Kontakten der Chipkarte und den Kontakten des Lesers wird durch einen Endlagenschalter aktiviert, sobald der Schlitten den Endlagenschalter erreicht hat. Beim Einschieben der Karte wird der Schlitten mitbewegt und zwar zunächst über die eigentliche Endposition hinaus, bevor der Schlitten nach unten in die Endlagen-Rastposition abgesenkt und festgehalten wird. Bei der Bewegung des Schlittens wird gleichzeitig Druck auf eine Feder ausgeübt, die einen Federarm in Richtung auf einen Drucktaster bewegt, wobei die Dimensionierung derart ist, dass der Drucktaster in der tatsächlichen Endstellung des Schlittens in Schaltposition liegt, so dass die Kontaktierung zwischen Chipkarte und Leser gewährleistet ist.

### Vorteile der Erfindung

Der erfindungsgemäße Kartenleser mit den Merkmalen des Anspruchs 1 hat demgegenüber den Vorteil, daß eine einfache und wenig aufwendige Möglichkeit zur Verriegelung des Schiebeelements gegeben ist. Es werden außerdem Platz und Kosten eingespart und keine elektrische Energie benötigt.

Vorteilhaft ist außerdem, daß das Schiebeelement zum Einrasten im Kartenschacht lediglich eine einfache Rastnase benötigt und auf eine aufwendige Einarbeitung einer Schaltkulisse mit Schaltherz, die mit einem rastbaren Schalthebel zusammenwirkt, verzichtet werden kann. Auch dadurch lassen sich Aufwand und Kosten sparen.

Durch die in den Unteransprüchen aufgeführten Maßnahmen sind vorteilhafte Weiterbildungen und Verbesserungen des im Hauptanspruch angegebenen Kartenlesers möglich.

Vorteilhaft gemäß Anspruch 2 ist die von der Führungsschiene abgewinkelte Rast, in die die Rastnase einrastbar ist. Auf diese Weise läßt sich die Rastverbindung besonders einfach realisieren.

Vorteilhaft nach Anspruch 3 ist der in den Kartenschacht hineinragende erste Vorsprung des Schiebeelements zur Aufnahme der Chipkarte. Auf diese Weise ist kein die Chipkarte umfassender Schlitten erforderlich, so daß Material und damit Kosten eingespart werden und zum Einführen der Chipkarte in den Kartenschacht weniger Kraftaufwand notwendig ist.

Vorteilhaft nach Anspruch 4 ist die Verwendung einer ersten Feder zum Drücken der Rastnase in die Rast. Dies stellt eine einfache und preiswerte Verriegelungsmethode dar.

Vorteilhaft gemäß Anspruch 5 ist der zweite Vorsprung, der in der Endposition der Chipkarte durch die erste Feder gegen einen ersten Schalthebel der ersten Schaltanordnung drückbar ist, so daß der erste Schalthebel mit einem zweiten Schalthebel der ersten Schaltanordnung kontaktiert. Auf diese Weise wird ohne wesentlichen Zusatzaufwand an Material für das Schiebeelement gleichzeitig mit dem Einrasten die erste Schaltanordnung betätigt. Somit wird die erste Schaltanordnung direkt durch das Schiebeelement betätigt und nicht über einen zusätzlichen, nicht zur ersten Schaltanordnung gehörenden dritten Schalthebel.

Vorteilhaft nach Anspruch 6 ist die Zugänglichkeit des Schiebeelements an einer Außenseite des Kartenlesers und die Entriegelung des Schiebeelements in der Endposition der Chipkarte gegen die Federkraft der ersten Feder. Auf diese Weise wird die Entriegelung verzögert, so daß die Kontaktierung zwischen den Kontakten der Chipkarte und den Gegenkontakten des Kartenlesers bis zur Beendigung eines aktuellen Lese- und/oder Schreibvorgangs aufrechterhalten bleibt und der Mikrochip der Chipkarte bzw. der Rechner im Kartenleser vor Zerstörung bewahrt wird.

Vorteilhaft nach Anspruch 8 sind die in Einschubrichtung vorgesehenen Dämpfungsmittel, die das Verschieben der Chipkarte aus der Endposition bis mindestens in die Entnahmeposition verzögern. Auf diese Weise wird der Schutz vor vorzeitiger Unterbrechung der Kontaktierung weiter verbessert.

Vorteilhaft nach Anspruch 9 ist die Betätigung einer zweiten Schaltanordnung durch die Chipkarte mindestens zwischen der Endposition und der Entnahmeposition. Auf diese Weise ist für Kartenleser, die zusätzlich eine "Schlaffunktion" aufweisen, um den Stromverbrauch zu verringern, ein voreilendes Einschalten vor Erreichen der Endposition beim Einschieben der Chipkarte und ein nacheilendes Ausschalten bei Entnahme der Chipkarte möglich.

Voreilhaft nach Anspruch 10 sind die Gegenkontakte des Kartenlesers, die bei Entnahme der Chipkarte bis zur Entnahmeposition miteilen. Dadurch wird die Kontaktierung zwischen den Kontakten der Chipkarte und den Gegenkontakten des Kartenlesers zusätzlich vor frühzeitiger Unterbrechung bei der Entnahme der Chipkarte geschützt.

### Zeichnung

Ein Ausführungsbeispiel der Erfindung ist in der Zeichnung dargestellt und in der nachfolgenden Beschreibung näher erläutert. Es zeigen Figur 1 eine schematische Anordnung einer Chipkarte in einem Kartenleser, Figur 2 eine Chipkarte in einem Kartenleser bei Entnahmeposition und miteilenden Gegenkontakten, Figur 3 eine Chipkarte in einem Kartenleser in Endposition bei miteilenden Gegenkontakten, Figur 4a - 4c drei Positionen des Schiebeelements bei Entnahme der Chipkarte von der Endposition bis zur Entnahmeposition, Figur 5 eine Chipkarte in einem Kartenleser in Entnahmeposition bei feststehenden Gegenkontakten und Figur 6 eine Chipkarte in einem Kartenleser in Endposition bei feststehenden Gegenkontakten.

### Beschreibung des Ausführungsbeispiels

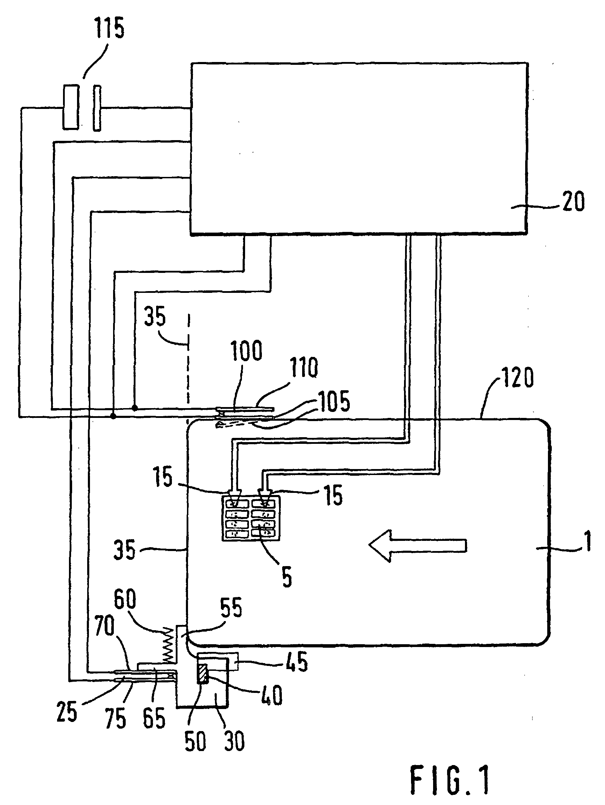

In Figur 1 kennzeichnet 1 eine Chipkarte mit acht Kontakten 5 auf der Oberfläche der Chipkarte 1, die mit einem Mikrochip der Chipkarte 1 elektrisch leitend verbunden sind. Der Kartenleser weist Gegenkontakte 15 auf, die gegen die Kontakte 5 der Chipkarte 1 drücken und auf diese Weise die Kontakte 5 elektrisch leitend mit einem Rechner 20 verbinden. Die Chipkarte 1 befindet sich in einer gestrichelt dargestellten Endposition 35 im Kartenleser und wird von einem ersten Vorsprung 55 eines Schiebeelements 30 aufgenommen, der in den nicht dargestellten Kartenschacht des Kartenlesers hineinragt. Das Schiebeelement 30 weist eine Rastnase 40 auf, die in eine Rast 50 einer Führungsschiene 45 greift, wobei die Führungsschiene 45 parallel zu der durch einen Pfeil gekennzeichneten Einschubrichtung verläuft und in der Nähe der Endposition 35 der Chipkarte 1 in die rechtwinklig von der Führungsschiene 45 abgewinkelte Rast 50 mündet. Das Schiebeelement 30 weist einen zweiten Vorsprung 65 parallel zur Einschubrichtung zum Kartenschachtboden des Kartenlesers hin auf. Der zweite Vorsprung 65 wird durch eine vertikal zur Einschubrichtung verlaufende und im Kartenleser befestigte erste Feder 60 gegen einen ersten Schalthebel 70 einer ersten Schaltanordnung 25 gedrückt, so daß der erste Schalthebel 70 mit einem zweiten Schalthebel 75 der ersten Schaltanordnung 25 kontaktiert. Gleichzeitig drückt die erste Feder 60 die Rastnase 40 in die Rast 50. Die erste Schaltanordnung 25 ist mit dem Rechner 20 verbunden. Die Chipkarte 1 drückt mit einer dem Schiebeelement 30 gegenüberliegenden Kante 120 gegen einen ersten Schalthebel 105 einer zweiten Schaltanordnung 100, der bei entnommener Chipkarte 1 in den Kartenschacht des Kartenlesers hineinragt und dessen Position für diesen Fall gestrichelt dargestellt ist. Der erste Schalthebel 105 der zweiten Schaltanordnung 100 kontaktiert bei eingeführter Chipkarte 1 gemäß Figur 1 mit einem zweiten Schalthebel 110 der zweiten Schaltanordnung 100. Die zweite Schaltanordnung 100 ist ebenfalls mit dem Rechner 20 verbunden und außerdem an eine Batterie 115 angeschlossen, die den Rechner 20 mit Spannung versorgt.

Durch Schließen der ersten Schaltanordnung 25 wird dem Rechner 20 mitgeteilt, daß sich eine Chipkarte 1 im Kartenleser befindet. Daraufhin kann der Rechner 20 Leseund/oder Schreibvorgänge auf dem Mikrochip der Chipkarte 1 starten. Durch Öffnen der ersten Schaltanordnung 25 wird dem Rechner 20 die Entnahme der Chipkarte 1 angekündigt, so daß er aktuelle Lese- und/oder Schreibvorgänge ordnungsgemäß beendet bzw. keinen neuen Lese- und/oder Schreibvorgang beginnt.

Beim Einschieben der Chipkarte 1 in den Kartenleser wird zuerst die zweite Schaltanordnung 100 geschlossen, da sie sich vor der Endposition 35 befindet und daher betätigt wird, bevor die Chipkarte 1 die Endposition 35 erreicht und die erste Schaltanordnung 25 betätigt werden kann. Auf diese Weise läßt sich für Kartenleser, die zusätzlich eine "Schlaffunktion" haben, der Stromverbrauch reduzieren. Dabei wird die Batterie 115 rechtzeitig vor Betätigung der ersten Schaltanordnung 25 eingeschaltet, so daß der Rechner 20 eine in Endposition 35 befindliche Chipkarte 1 im Kartenleser detektieren kann. Gleichzeitig wird durch die Anordnung der zweiten Schaltanordnung 100 vor der Endposition 35 erreicht; daß auch bei der Entnahme der Chipkarte 1 die Batterie 115 nicht gleich ausgeschaltet wird und der Rechner 20 somit noch Energie zum ordnungsgemäßen Beenden eines aktuellen Schreib- und/oder Lesevorgangs aus der Batterie 115 beziehen kann. Anstelle des Ein- bzw. Ausschaltens der Batterie 115 durch die zweite Schaltanordnung 100 kann der Rechner 20 durch die zweite Schaltanordnung 100 auch in eine durch geringen Stromverbrauch gekennzeichnete Ruheposition bei Entnahme der Chipkarte 1 gebracht werden. Bei Einführung der Chipkarte 1 wird dann durch Betätigung der zweiten Schaltanordnung 100 die für die Lese- und/oder Schreiboperationen auf dem Mikrochip der Chipkarte 1 erforderliche Stromversorgung eingeschaltet.

Gemäß dem dargestellten Ausführungsbeispiel befindet sich die erste Feder 60 und der zweite Vorsprung 65 auf der der Chipkarte 1 zugewandten Seite der ersten Schaltanordnung 25. Dabei ist der erste Schalthebel 70 der ersten Schaltanordnung 25 der Chipkarte 1 zugewandt und der zweite Schalthebel 75 der ersten Schaltanordnung 25 ist der Chipkarte 1 abgewandt.

Im dargestellten Ausführungsbeispiel wird das Schiebeelement 30 zum Einrasten und zur Betätigung der ersten Schaltanordnung 25 von der Chipkarte 1 weggedrückt, wozu die Rast 50 in von der Chipkarte 1 weg weisende Richtung von der Führungsschiene 45 abgewinkelt ist. Denkbar wäre jedoch auch eine in Richtung zur Chipkarte 1 von der Führungsschiene 45 abgewinkelte Rast 50, wobei dann die erste Feder 60 zum Einrasten des Schiebeelements 30 in die Rast 50 mit dem zweiten Vorsprung 65 den zweiten Schalthebel 75 auf der der Chipkarte 1 abgewandten Seite der ersten Schaltanordnung 25 gegen den ersten Schalthebel 70 zur Kontaktierung drücken muß und die erste Feder 60 auf der der Chipkarte 1 abgewandten Seite der ersten Schaltanordnung 25 vertikal zur Einschubrichtung angebracht. sein muß. Der zweite Vorsprung 65 muß dann ebenfalls auf der der Chipkarte 1 abgewandten Seite der ersten Schaltanordnung 25 am Schiebeelement 30 angebracht sein.

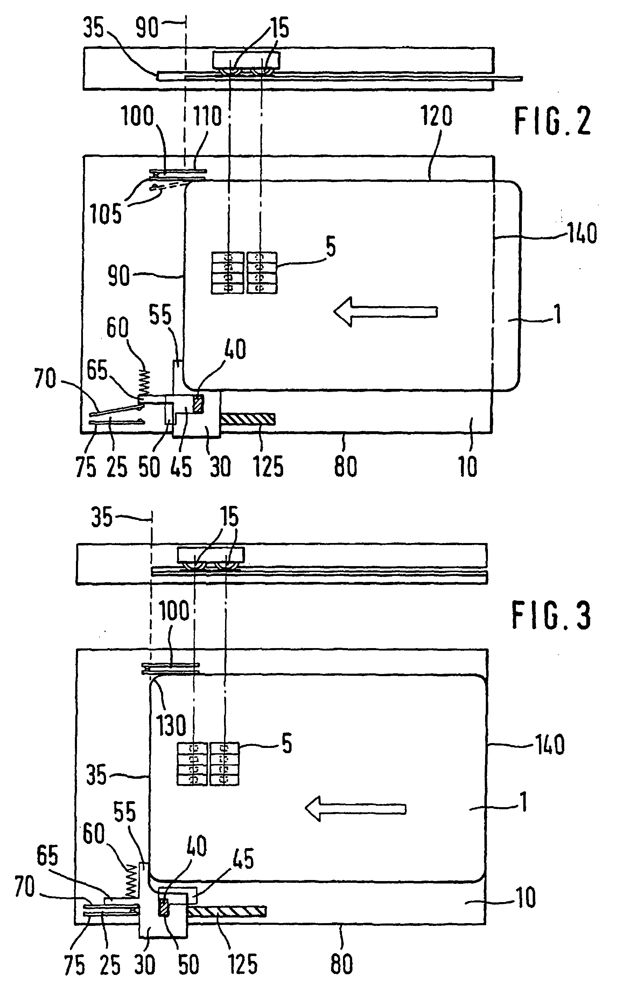

In Figur 2 ist ein Kartenschacht 10 des Kartenlesers dargestellt, in dem die Chipkarte 1 in eine durch eine gestrichelte Linie gekennzeichnete Entnahmeposition 90 eingeschoben ist. Sie ragt aus dem Kartschacht 10 heraus und kann daher einfach mit der Hand entnommen werden. Gemäß Figur 2 sind die Gegenkontakte 15 miteilend ausgebildet, so daß auch in der Entnahmeposition 90 die Kontakte 5 mittig von den Gegenkontakten 15 des Kartenlesers kontaktiert sind. Die zweite Schaltanordnung 100 ist geschlossen, da die Chipkarte 1 mit ihrer Kante 120, die gegenüber dem Schiebeelement 30 angeordnet ist, noch gegen den ersten Schalthebel 105 der zweite Schaltanordnung 100 drückt, so daß die beiden Schalthebel 105 und 110 der zweiten Schaltanordnung 100 miteinander kontaktieren. Auf diese Weise wird der Rechner 20 auch bei Entnahme der Chipkarte 1 noch mindestens bis zur Entnahmeposition 90 mit Energie versorgt, so daß ein aktueller Schreib- und/oder Lesevorgang ordnungsgemäß beendet werden kann. Der Figur 2 ist zu entnehmen, daß das Schiebeelement 30 von einer Außenseite 80 des Kartenlesers zugänglich ist, wozu die Außenseite 80 des Kartenlesers über eine nicht dargestellte Öffnung verfügt, in der das Schiebeelement 30 parallel zur Einschubrichtung von außen verschiebbar ist. Dabei kann das Schiebeelement 30 nur auf der durch die Länge der Führungsschine 45 festgelegten Strecke verschoben werden. In der Entnahmeposition 90 befindet sich die Rastnase 40 des Schiebeelements 30 bereits an dem der Einschuböffnung 140 des Kartenschachts 10 zugewandten Begrenzung der Führungsschine 45, so daß das Schiebeelement 30 nicht weiter in Entnahmerichtung bewegt werden kann. Dies ist auch nicht erforderlich, da die Chipkarte 1 in der Entnahmeposition 90 bereits aus dem Kartenschacht 10 zur Entnahme herausragt. Da sich die Rastnase 40 nun in der Führungsschiene 45 befindet, ist das Schiebeelement 30 gegenüber dem eingerasteten Zustand gemäß Figur 1 zur Chipkarte 1 hin verschoben, so daß der zweite Vorsprung 65 den ersten Schalthebel 70 der ersten Schaltanordnung 25 nicht mehr gegen den zweiten Schalthebel 75 der ersten Schaltanordnung 25 drückt und die erste Schaltanordnung 25 somit geöffnet ist. Zum Öffnen der ersten Schaltanordnung 25 wird der erste Schalthebel 70 der ersten Schaltanordnung 25 beispielsweise durch eine nicht in der Figur 2 dargestellte weitere Feder von dem zweiten Schalthebel 75 der ersten Schaltanordnung 25 weggedrückt, wobei die Federkraft der weiteren Feder kleiner als die Federkraft der ersten Feder 60 sein muß, damit die Schalterbetätigung in der beschriebenen Weise funktioniert. Die erste Feder 60 ist ortsfest im Kartenschacht 10 des Kartenlesers angebracht, wobei der zweite Vorsprung 65 so lang sein muß, daß auch in der Entnahmeposition 90 der Chipkarte 1 die erste Feder 60 auf dem zweiten Vorsprung 65 aufliegt und nicht vom zweiten Vorsprung 65 abgleiten kann. Die Verbindung zwischen erster Feder 60 und zweitem Vorsprung 65 ist dabei lose, so daß das Schiebeelement 30 gegen die erste Feder 60 verschoben werden kann. Wird die Chipkarte 1 noch weiter aus dem Kartenschacht 10 herausgezogen, so kippt der erste Schalthebel 105 der zweiten Schaltanordnung 100 zum Öffnen der zweiten Schaltanordnung 100 ein Stück nach unten in den Kartenschacht 10 hinein, beispielsweise unterstützt durch die Federkraft einer nicht dargestellten weiteren Feder. Von der Endposition 35 zur Entnahmeposition 90 wird die Chipkarte 1 mittels des ersten Vorsprungs 55 des Schiebeelements 30 geschoben, wobei der Kartenschacht 10 in Höhe des Schiebeelements 30 Dämpfungsmittel 125 aufweist, die parallel zur Einschubrichtung angeordnet sind und die die Schiebebewegung des Schiebeelements 30 verzögern, um die zur Beendigung noch aktueller Schreib- und/oder Lesevorgänge auf dem Mikrochip der Chipkarte 1 benötigte Zeit zu gewährleisten, so daß eine Zerstörung des Mikrochips bzw. des Rechners 20 vermieden wird.

Figur 3 zeigt die Chipkarte 1 im Kartenschacht 10 in der Endposition 35, wobei die Kontakte 5 durch die miteilenden Gegenkontakte 15 mittig kontaktiert werden. Ansonsten entspricht die Anordnung gemäß Figur 3 der Darstellung nach Figur 1.

Wird die Chipkarte 1 in den Kartenschacht 10 eingeführt, so befinden sich die Gegenkontakte 15 in der Nähe der Endposition 35, so daß eine mittige Kontaktierung mit den Kontakten 5 der Chipkarte 1 erst dann stattfindet, wenn die Chipkarte 1 sich in der Endposition 35 befindet. Gleichzeitig ist zunächst die zweite Schaltanordnung 100 geöffnet, d. h. der erste Schalthebel 105 der zweiten Schaltanordnung 100 hängt wie in Figur 2 gestrichelt dargestellt in den Kartenschacht 10 hinein. Schließlich befindet sich das Schiebeelement 30 in der in Figur 2 dargestellten Stellung der Entnahmeposition 90. Kurz vor Erreichen der Entnahmeposition 90 drückt die Chipkarte 1 mit ihrer gegenüber dem Schiebeelement 30 liegenden Kante 120 gegen den ersten Schalthebel 105 der zweiten Schaltanordnung 100, so daß sie mit dem zweiten Schalthebel 110 der zweiten Schaltanordnung 100 kontaktiert und die Batterie 115 einschaltet. Dabei wird der erste Schalthebel 105 der zweiten Schaltanordnung 100 von einer Rundung 130 der Kante 120 der Chipkarte 1 zunächst erfaßt und beim weiteren Einschieben der Chipkarte 1 entlang der Rundung 130 bis zur Kante 120 geführt, wo er dann mit dem zweiten Schalthebel 110 der zweiten Schaltanordnung 100 kontaktiert. Durch die somit eingeschaltete Batterie 115 ist der Rechner 20 zur Detektion einer vollständig eingeschobenen Chipkarte vorbereitet. Sobald die Chipkarte 1 die Entnahmeposition 90 erreicht, wird sie von dem ersten Vorsprung 55 des Schiebeelements 30 erfaßt. Das Schiebeelement 30 wird dann mit der Chipkarte 1 in Einschubrichtung mitbewegt, wobei die Rastnase 40 in der Führungsschiene 45 gleitet. Sobald die Rastnase 40 die Rast 50 erreicht, wird das Schiebeelement 30 durch die erste Feder 60 mit der Rastnase 40 in die Rast 50 gedrückt und die erste Schaltanordnung 25 geschlossen. Die Chipkarte 1 befindet sich dann in der Endposition 35 und der Rechner 20 detektiert die vollständig eingeschobene Chipkarte 1 und kann mit Lese- und/oder Schreiboperationen auf dem Mikrochip der Chipkarte 1 beginnen. Beim Einrasten des Schiebeelements 30 wird dieses gleichzeitig um den Rastweg aus der Öffnung der Außenseite 80 des Kartenschachtes 10 gedrückt. Die Position der Chipkarte 1 bleibt dabei unverändert, was beispielsweise durch eine entsprechende in den Figuren nicht dargestellte Führung im Kartenschacht 20 erreicht wird. Auf diese Weise bleibt die zweite Schaltanordnung 100 auch bei vollständig eingeschobener Chipkarte 1 weiterhin geschlossen. Zudem kontaktieren die Gegenkontakte 15 des Kartenlesers in der Endposition 35 der Chipkarte 1 im Kartenschacht 10 mit den Kontakten 5 auf der Oberfläche der Chipkarte 1. Dadurch können vom Rechner 20 gesteuerte Schreib- und/oder Lesevorgänge auf dem Mikrochip der Chipkarte 1 durchgeführt werden.

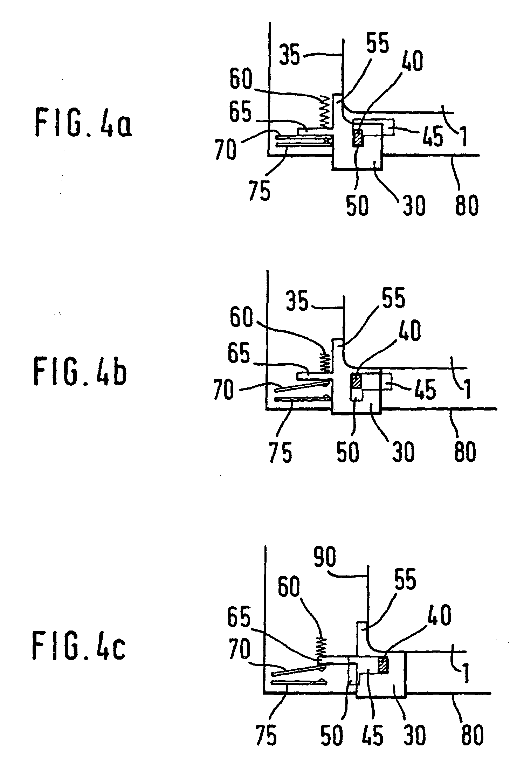

In Figur 4 sind drei Positionen des Schaltelements 30 bei Entnahme der Chipkarte 1 aus dem Kartenschacht 10 des Kartenlesers dargestellt. In Figur 4a befindet sich die Chipkarte 1 in der Endposition 35 gemäß Figur 3. Zum Entnehmen der Chipkarte 1 muß das Schiebeelement 30 gemäß Figur 4b von außen in Richtung des Kartenschachtes 10 gedrückt werden, wodurch die erste Schaltanordnung 25 geöffnet wird und die Rastnase 40 aus der Rast 50 entfernt wird. Durch Öffnen der ersten Schaltanordnung 25 wird dem Rechner 20 mitgeteilt, daß die Chipkarte 1 entnommen werden soll. Der Rechner 20 beginnt dann damit, noch aktuelle

Schreib- und/oder Lesevorgänge ordnungsgemäß zu beenden, so daß eine Zerstörung des Mikrochips der Chipkarte 1 oder des Rechners 20 verhindert wird. Für die ordnungsgemäße Beendigung der aktuellen Schreib- und/oder Lesevorgänge ist eine Zeit zwischen 50 ms und 100 ms erforderlich. Die Kontaktierung zwischen den Gegenkontakten 15 und den Kontakten 5 der Chipkarte 1 muß also mindestens für 100 ms aufrechterhalten werden. Durch Schieben des Schiebeelements 30 entgegen der Einschubrichtung wird die Chipkarte 1 in die Entnahmeposition 90 gebracht. Dort stößt die Rastnase 40 gemäß Figur 4c an das der Einschuböffnung 140 des Kartenschachtes 10 zugewandte Ende der Führungsschiene 45. Durch entsprechende Steuerbefehle aus dem Rechner 20 eilen die Gegenkontakte 15 bis zur Entnahmeposition 90 der Chipkarte 1 mit, so daß eine mittige Kontaktierung bis dorthin aufrechterhalten bleibt. Durch die Dämpfungsmittel 125 wird die Schiebebewegung von der Endposition 35 zur Entnahmeposition 90 verzögert. Die Verzögerung dieser Schiebebewegung und das Miteilen der Gegenkontakte 15 verhindern eine vorzeitige Unterbrechung der Kontaktierung. Sobald die Chipkarte 1 an der Entnahmeposition 90 angelangt ist, sind alle aktuellen Schreib- und/oder Lesevorgänge ordnungsgemäß beendet, so daß die Chipkarte 1 ohne Zerstörung des Mikrochips auf der Chipkarte 1 oder des Rechners 20 aus dem Kartenschacht 10 entfernt werden kann. Beim weiteren Herausziehen der Chipkarte 1 aus dem Kartenschacht 10 wird die zweite Schaltanordnung 100 geöffnet und die Batterie 115 zur Energieeinsparung abgeschaltet.

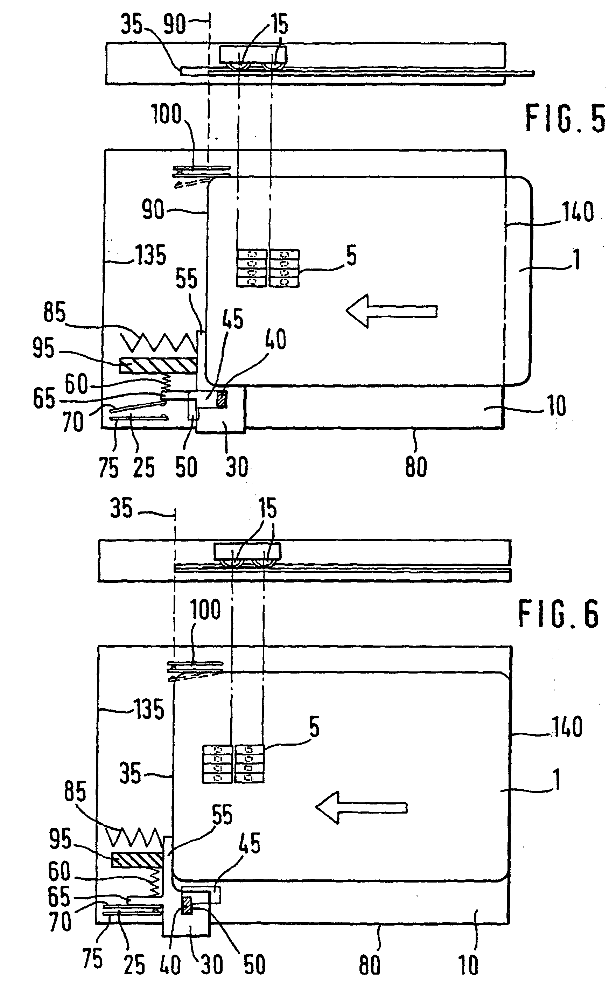

Gemäß Figur 5 und Figur 6 sind die Gegenkontakte 15 nicht miteilend sondern starr mit dem Kartenleser verbunden. Außerdem ist am Kartenschachtboden 135, der der Einschuböffnung 140 des Kartenschachtes 10 gegenüberliegt, eine zweite Feder 85 in Einschubrichtung angebracht und im Kartenleser befestigt, die gegen den ersten Vorsprung 55 des Schiebeelements 30 drückt und gegebenenfalls mit diesem verbunden ist. Parallel zur zweiten Feder 85 sind weitere Dämpfungsmittel 95 im Kartenschacht 10 angebracht. Die Dämpfungsmittel 125 für das Schiebeelement 30 gemäß den Figuren 2 und 3 sind in Figur 5 und Figur 6 nicht eingezeichnet, können jedoch zusätzlich zu den weiteren Dämpfungsmitteln 95 vorhanden sein. Da die Gegenkontakte 15 starr mit dem Kartenleser verbunden sind, muß die verfügbare Länge der Kontaktflächen der Kontakte 5 auf der Chipkarte ausgenutzt werden, um die zum ordnungsgemäßen Beenden von aktuellen Schreib- und/oder Lesevorgänge beim Entnehmen der Chipkarte 1 benötigte Zeit aufrechtzuerhalten. der Einschub und die Entnahme der Chipkarte 1 erfolgt in der beschriebenen Weise, wobei das Einschieben der Chipkarte 1 in den Kartenschacht 10 gegen die Federkraft der zweiten Feder 85 erfolgt und das Verschieben der Chipkarte 1 bei Entnahme von der Endposition 35 zur Entnahmeposition 90 durch die Kraft der vorgespannten zweiten Feder 85 unterstützt bzw. ausgeführt wird.

Durch die weiteren Dämpfungsmittel 95 wird der Auswurf der Chipkarte 1 so verzögert, daß die zum ordnungsgemäßen Beenden noch aktueller Schreib- und/oder Lesevorgänge benötigte Zeit zur Verfügung steht. Durch die Dämpfungsmittel 125 für das Schiebeelement 30 ist eine zusätzliche Verzögerung des Auswurfs möglich, so daß eine zusätzliche Sicherung gegen die Zerstörung des Mikrochips bzw. des Rechners 20 vorhanden ist. Schließlich können auch die Gegenkontakte 15 zusätzlich miteilend ausgeführt werden, so daß die Sicherung der Kontaktierung für die zur ordnungsgemäßen Beendigung aktueller Schreib- und/oder Lesevorgänge benötigte Zeit weiter verbessert wird.

Die verzögerte Abschaltung der Batterie 115 durch die zweite Schaltanordnung 100 kann als Teilfunktion der zweiten Schaltungsanordnung 100 durch eine mit dem Rechner 20 zusammenwirkende Verzögerungsschaltung auch elektronisch erfolgen, wobei die Verzögerungsschaltung durch Öffnen der ersten Schaltanordnung 25 aktiviert wird.

Zur Verzögerung des Lösens der Kontaktierung bei Entnahme der Chipkarte 1 dient auch der Entrastvorgang selbst. Die erste Schaltanordnung 25 wird nämlich bereits zu Beginn des Entrastvorgangs geöffnet, so daß der weitere Verlauf des Entrastvorgangs zur benötigten Verzögerung beiträgt, zumal er gegen die Federkraft der ersten Feder 60 erfolgt.

## Patentansprüche

1. Kartenleser für Chipkarten (1) mit einem Mikrochip und mit Kontakten (5) auf der Oberfläche der Chipkarte (1), mit einem Kartenschacht (10) zur Aufnahme und mechanischen Arretierung der Chipkarte (1) und mit Gegenkontakten (15) zum mechanischen Zusammenwirken mit den Kontakten (5) des Mikrochips zur elektrisch leitenden Verbindung eines Rechners (20) mit dem Mikrochip, mit einer ersten, auf die An- oder Abwesenheit einer Chipkarte (1) im Kartenschacht (10) ansprechenden Schaltanordnung (25), wobei im Kartenschacht (10) ein von der Chipkarte (1) bewegbares Schiebeelement (30) vorhanden ist, das parallel zur Einschubrichtung der Chipkarte (1) in den Kartenschacht (10) geführt ist, das Schiebeelement (30) in einer Endposition (35) der Chipkarte (1) im Kartenschacht (10) einrastbar ist, durch das Schiebeelement (30) in der Endposition (35) der Chipkarte (1) die erste Schaltanordnung (25) betätigbar ist und das Schiebeelement (30) eine Rastnase (40) aufweist, die in eine in Einschubrichtung verlaufende Führungsschiene (45) greift, **dadurch gekennzeichnet, daß** das Schiebeelement beim Einvasten einen Rastweg zurücklegt, ohne dass sich die Position der Chipkarte (1) ändert.

2. Kartenleser nach Anspruch 1, **dadurch gekennzeichnet, daß** die Führungsschiene (45) in der Nähe der Endposition (35) der Chipkarte (1) in eine von der Führungsschiene (45) abgewinkelte Rast (50) mündet, in die die Rastnase (40) einrastbar ist.

3. Kartenleser nach Anspruch 1 oder 2, **dadurch gekennzeichnet, daß** das Schiebeelement (30) einen in den Kartenschacht (10) hineinragenden ersten Vorsprung (55) aufweist, der zur Aufnahme der Chipkarte (1) dient.

4. Kartenleser nach einem der vorherigen Ansprüche, **dadurch gekennzeichnet, daß** die Rastnase (40) des Schiebeelementes (30) in der Endposition (35) der Chipkarte (1) durch eine erste Feder (60) in die Rast (50) drückbar ist.

5. Kartenleser nach einem der vorherigen Ansprüche, **dadurch gekennzeichnet, daß** das Schiebeelement (30) einen zweiten Vorsprung (65) in Einschubrichtung aufweist, daß der zweite Vorsprung (65) in der Endposition (35) der Chipkarte (1) durch die erste Feder (60) gegen einen ersten Schalthebel (70) der ersten Schaltanordnung (25) drückbar ist, so daß der erste Schalthebel (70) mit einem zweiten Schalthebel (75) der ersten Schaltanordnung (25) kontaktiert.

6. Kartenleser nach einem der vorherigen Ansprüche, **dadurch gekennzeichnet, daß** das Schiebelement (30) an einer Außenseite (80) des Kartenlesers zugänglich ist und in der Endposition (35) der Chipkarte (1) gegen die Federkraft der ersten Feder (60) entriegelbar ist.

7. Kartenleser nach einem der Ansprüche 3-6, **dadurch gekennzeichnet, daß** der erste Vorsprung (55) in der Endposition (35) der Chipkarte (1) gegen eine zweite Feder (85) in Einschubrichtung drückt und daß durch die zweite Feder (85) die Chipkarte (1) nach Entriegelung aus der Endposition (35) in eine Entnahmeposition (90) bringbar ist.

8. Kartenleser nach Anspruch 7, **dadurch gekennzeichnet, daß** in Einschubrichtung Dämpfungsmittel (95, 125) vorgesehen sind, die das Verschieben der Chipkarte (1) aus der Endposition (35) bis mindestens in die Entnahmeposition (90) verzögern.

9. Kartenleser nach einem der vorherigen Ansprüche, **dadurch gekennzeichnet, daß** eine zweite Schaltanordnung (100) vorgesehen ist, die durch die Chipkarte (1) mindestens zwischen der Endposition (35) und der Entnahmeposition (90) betätigbar ist.

10. Kartenleser nach einem der vorherigen Ansprüche, **dadurch gekennzeichnet, daß** die Gegenkontakte (15) des Kartenlesers derart mit dem Kartenleser in Wirkverbindung stehen, daß sie bei Entnahme der Chipkarte (1) bis zur Entnahmeposition (90) miteilen.

## Claims

1. Card reader for chip cards (1) with a microchip and with contacts (5) on the surface of the chip card (1), with a card compartment (10) for receiving and mechanically arresting the chip card (1) and with mating contacts (15) for mechanically interacting with the contacts (5) of the microchip for the electrically conducting connection of a computer (20) to the microchip, with a first switching arrangement (25), responding to the presence or absence of a chip card (1) in the card compartment (10), there being present in the card compartment (10) a sliding element (30) which can be moved by the chip card (1) and is guided parallel to the pushing-in direction of the chip card (1) into the card compartment (10), the sliding element (30) being able to engage in an end position (35) of the chip card (1) in the card compartment (10), the first switching arrangement (25) being able to be actuated by the sliding element (30) in the end position (35) of the chip card (1) and the sliding element (30) having a detent (40), which engages in a guide rail (45) running in the pushing-in direction, **characterized in that**, during engagement, the sliding element covers an engaging path without changing the position of the chip card (1).

2. Card reader according to Claim 1, **characterized in that** the guide rail (45) opens out in the vicinity of the end position (35) of the chip card (1) into a notch (50) which is angled away from the guide rail (45) and into which the detent (40) can be made to engage.

3. Card reader according to Claim 1 or 2, **characterized in that** the sliding element (30) has a first projection (55), which reaches into the card compartment (10) and serves for receiving the chip card (1).

4. Card reader according to one of the preceding claims, **characterized in that**, in the end position (35) of the chip card (1), the detent (40) of the sliding element (30) can be pressed by a first spring (60) into the notch (50).

5. Card reader according to one of the preceding claims, **characterized in that** the sliding element (30) has a second projection (65) in the pushing-in direction, **in that**, in the end position (35) of the chip card (1), the second projection (65) can be pressed by the first spring (60) against a first switching lever (70) of the first switching arrangement (25), so that the first switching lever (70) makes contact with a second switching lever (75) of the first switching arrangement (25).

6. Card reader according to one of the preceding claims, **characterized in that** the sliding element (30) is accessible on an outer side (80) of the card reader and, in the end position (35) of the chip card (1), can be unlocked against the spring force of the first spring (60).

7. Card reader according to one of Claims 3-6, **characterized in that**, in the end position (35) of the chip card (1), the first projection (55) presses against a second spring (85) in the pushing-in direction and **in that**, after unlocking, the chip card (1) can be brought by the second spring (85) from the end position (35) into a removal position (90).

8. Card reader according to Claim 7, **characterized in that**, in the pushing-in direction, damping means (95, 125) which delay the displacing of the chip card (1) from the end position (35) at least into the removal position (90) are provided.

9. Card reader according to one of the preceding claims, **characterized in that** a second switching arrangement (100), which can be actuated by the chip card (1) at least between the end position (35) and the removal position (90), is provided.

10. Card reader according to one of the preceding claims, **characterized in that** the mating contacts (15) of the card reader are in operative connection with the card reader in such a way that, when the chip card (1) is removed, they accompany it up to the removal position (90).

## Revendications

1. Lecteur de cartes à puce (1) comportant une puce et des contacts (5) à la surface de la carte à puce (1), un logement à carte (10) pour recevoir et bloquer mécaniquement la carte à puce (1) ainsi que des contacts complémentaires (15) pour coopérer mécaniquement avec les contacts (5) de la puce et réaliser la liaison électrique entre un calculateur (20) et la puce, avec un premier circuit (25) mis en oeuvre par la présence ou l'absence de la carte à puce (1) dans le logement de carte (10),
lecteur dans lequel un élément coulissant (30) est déplacé par la carte à puce (1) dans le logement de carte (10), en étant guidé parallèlement à la direction d'introduction de la carte à puce dans le logement de carte (10), cet élément coulissant (30) s'accroche lorsque la carte à puce (1) occupe une position de fin de course (35) dans le logement de carte (10), puis
l'élément coulissant (30) actionne le premier circuit (25) lorsque la carte à puce (1) occupe la position de fin de course (35), et
l'élément coulissant (30) comporte un bec d'accrochage (40) qui pénètre dans un rail de guidage (45) dirigé dans la direction d'introduction,
**caractérisé en ce que**
l'élément coulissant parcourt un chemin d'accrochage au moment de son accrochage sans que la position de la carte à puce (1) ne change.

2. Lecteur de carte selon la revendication 1,
**caractérisé en ce que**
le rail de guidage (45) débouche à proximité de la position de fin de course (35) de la carte à puce (1) dans un logement recourbé (55) par rapport au rail de guidage (45), logement dans lequel s'accroche le bec d'accrochage (40).

3. Lecteur de carte selon la revendication 1 ou 2,
**caractérisé en ce que**
l'élément coulissant (30) comporte une première partie en saillie (55) pénétrant dans le logement de carte (10) et qui sert à extraire la carte à puce (1).

4. Lecteur de carte selon l'une des revendications précédentes,
**caractérisé en ce que**
le bec d'accrochage (40) de l'élément coulissant (30) est poussé dans le logement (50) par un premier ressort (60) lorsque la carte à puce (1) occupe la position de fin de course (35).

5. Lecteur de carte selon l'une des revendications précédentes,
**caractérisé en ce que**
l'élément coulissant (30) comporte une seconde partie en saillie (65) dans la direction d'introduction,
la seconde partie en saillie (65) pouvant être poussée par le premier ressort (60) contre un premier levier de commutation (70) du premier circuit de commutation (25) lorsque la carte à puce (1) occupe la position de fin course (35) pour que le premier levier de commutation (70) entre en contact avec un second levier de commutation (75) du premier circuit (25).

6. Lecteur de carte selon l'une des revendications précédentes,
**caractérisé en ce que**
l'élément coulissant (30) est accessible au niveau d'un côté extérieur (80) du lecteur de carte et lorsque la carte à puce (1) occupe la position de fin de course (35) il peut être déverrouillé contre la force développée par le premier ressort (60).

7. Lecteur de carte selon l'une des revendications 3 à 6,
**caractérisé en ce que**
lorsque la carte à puce (1) occupe la position de fin de course (35), la première partie en saillie (55) pousse contre un second ressort (85) dans la direction d'introduction, et
le second ressort (85) permet de conduire la carte à puce (1) de la position de fin de course (35) à la position d'extraction (90) après le déverrouillage.

8. Lecteur de carte selon la revendication 7,
**caractérisé par**
des moyens d'amortissement (95, 125) prévus dans la direction d'introduction qui retardent le coulissement de la carte à puce à partir de la position de fin de course (35) jusqu'au moins dans la position d'extraction (90).

9. Lecteur de carte selon l'une des revendications précédentes,
**caractérisé par**
un second circuit (100) actionné par la carte à puce (1) au moins entre la position de fin de course (35) et la position d'extraction (90).

10. Lecteur de carte selon l'une des revendications précédentes,
**caractérisé en ce que**
les contacts complémentaires (15) du lecteur de carte coopèrent avec le lecteur de carte pour qu'à l'extraction de la carte à puce (1) ils suivent jusqu'à la position d'extraction (90).
